# EUROPEAN PATENT APPLICATION

(11) **EP 4 622 028 A1**
(43) Date of publication of application: **24.09.2025**
(21) Application number: 23890087.2
(22) Date of filing: 28.04.2023
(51) Int. Cl.: H02B 1/56, H02B 1/46, H02B 1/48, H02S 10/00

(54) **CONTAINER AND PHOTOVOLTAIC POWER STATION**

(30) Priority: 15.11.2022 CN 202223050664 U
(71) Applicant: Sungrow Power Supply Co., Ltd., Hefei, Anhui 230088 (CN)
(72) Inventor: MAO, Junjie, Hefei, Anhui 230088 (CN); LI, Huadong, Hefei, Anhui 230088 (CN)
(74) Representative: Zacco Norway AS
(86) International application number: PCT/CN2023/091666
(87) International publication number: WO 2024/103643

(57) **Abstract**

Disclosed in the present application is a container, which is used in a photovoltaic power station and comprises a container body, wherein the interior space of the container body is divided into a plurality of compartments by a partition plate, and the partition plate is fixed inside the container body; one or more partition plates are provided; and at least one of the partition plates is provided with a heat exchange structure, which is used for making the compartments on two sides of the partition plate exchange heat. **In** the container, after a partition plate is provided with the heat exchange structure, the compartments on two sides of the partition plate exchange heat, wherein the heat of the compartment with a higher temperature is conducted into the compartment with a lower temperature so as to be dissipated, thereby improving the refrigeration utilization rate of a heat dissipation system in the compartment with the lower temperature, saving on refrigeration energy consumption, and improving the overall refrigeration efficiency of the container. Further disclosed in the present application is a photovoltaic power station using the container. The overall refrigeration efficiency of the container is high, such that refrigeration energy consumption can be saved on, and the cost is reduced.

## Description

This application claims the priority of Chinese Patent Application No. 202223050664.8, titled "CONTAINER AND PHOTOVOLTAIC POWER STATION", filed on November 15, 2022 with the China National Intellectual Property Administration, which is incorporated herein by reference in its entirety.

### FIELD

The present application relates to the technical field of heat dissipation of containers in power station, and in particular to a container and a photovoltaic power station.

### BACKGROUND

In a photovoltaic power station, equipment such as storage batteries and converters are mostly arranged in power station site through a container. At present, a single container generally houses a variety of equipment. In order to arrange and classify the variety of equipment, internal space of the container is divided into multiple compartments by a partition plate, and the compartments are mutually isolated.

Each compartment contains different equipment and thus having different cooling requirements. Typically, different cooling systems are used for the compartments. However, some of the compartments employ cooling systems with high cooling efficiency, resulting in excessively low temperatures that exceed the cooling requirements of the equipment inside. Since the compartments are isolated from each other, even with temperature stratification and large temperature differences between the adjacent compartments, low temperatures in these compartments can hardly affect adjacent compartments through conduction, resulting in low cooling utilization in these compartments, and thus the overall cooling efficiency of the container is reduced.

Therefore, a problem to be addressed by those skilled in the art is to effectively improve the cooling utilization of the cooling system in the compartments with lower temperatures in the container, to improve the overall cooling efficiency of the container.

### SUMMARY

In view of this, a container applied in a photovoltaic power station is provided according to the present application, where an internal space of the container is divided into multiple compartments by a partition plate, and the partition plate may be provided with a heat exchange structure, to enable heat exchange between the compartments on both sides of the partition plate, allowing heat from the compartment with higher temperature to be transferred to the adjacent compartment with lower temperature for dissipation. This improves the cooling utilization of the cooling system in the compartment with lower temperature, thereby enhancing the overall cooling efficiency of the container. A photovoltaic power station employing the above container is further provided according to the present application, the overall cooling efficiency of the container is high, which reduces cooling energy consumption, and lowers costs.

In order to achieve the above object, the following technical solutions are provided according to the present application.

A container applied in a photovoltaic power station includes a container body. An internal space of the container body is divided into multiple compartments by a partition plate. The number of the partition plate is one or more, and at least one of the one or more partition plates is provided with a heat exchange structure for heat exchange between compartments, located at both sides of the at least one partition plate, of the multiple compartments.

Preferably, the heat exchange structure is a vent port.

Preferably, the number of the vent ports is multiple, and there are two types of vent ports, which have opposite ventilation directions.

Preferably, at least one of the two types of vent ports is provided with a fan, and a direction of airflow from the fan is the same as a ventilation direction of the vent port where the fan is mounted.

Preferably, the two types of vent ports are arranged at two opposite ends of the partition plate, respectively.

Preferably, a filter screen is mounted at the vent port.

Preferably, the heat exchange structure includes a heat exchanger, and the heat exchanger is configured to absorb heat from the compartment located at one of both sides of the partition plate and dissipate the heat into the compartment located at the other one of both sides of the partition plate.

Preferably, the number of the partition plate is one, and the compartments at both sides of the partition plate are a battery compartment and an electrical device compartment respectively.

Preferably, the battery compartment and the electrical device compartment are arranged sequentially along a length direction of the container body, or the battery compartment and the electrical device compartment are arranged sequentially along a width direction of the container body.

Preferably, a photovoltaic power station includes the container according to any one of the above technical solutions.

A container applied in a photovoltaic power station is provided according to the present application, including a container body. The internal space of the container body is divided into multiple compartments by a partition plate, which is fixed inside the container. The number of the partition plate may be one or more, and at least one of the partition plates is provided with a heat exchange structure to enable heat exchange between the compartments on both sides of the partition plate.

When applying the above container, the partition plates selected to be provided with the heat exchange structures should be determined based on the cooling utilization of the cooling systems in the compartments. Specifically, if the cooling system in a certain compartment has low cooling utilization, where its cooling capacity exceeds the cooling requirements of the equipment, causing the temperature in that compartment to be lower than that in an adjacent compartment, the partition plate separating this compartment from the adjacent compartment may be provided with the heat exchange structure.

In the above container, the partition plate being provided with the heat exchange structure allows heat exchange between the compartments on both sides of the partition plate. Heat from the compartment with higher temperature is transferred to the compartment with lower temperature for dissipation. This improves the cooling utilization of the cooling system in the compartment with lower temperature, reduces cooling energy consumption, and enhances the overall cooling efficiency of the container.

A photovoltaic power station employing the above container is further provided according to the present application, the container has high overall cooling efficiency, which reduces cooling energy consumption, and lowers costs.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
FIG. 1 is a schematic view showing the structure of a boiler evaporator according to an embodiment of the present application; and
FIG. 2 is a schematic view showing the structure of connection between each row of tube bundles and an outlet header in the boiler evaporator according to an embodiment of the present application.

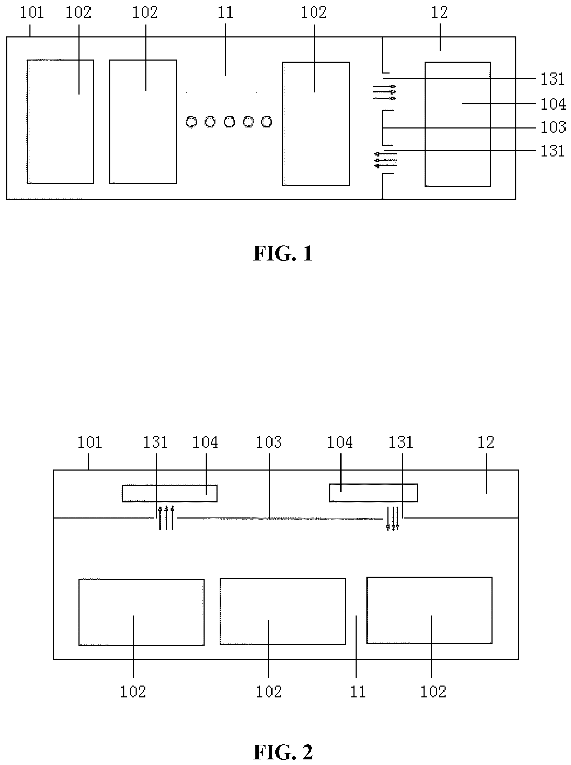

Reference numerals in FIG. 1 and FIG. 2 are as follows:

| | | | |
|---|---|---|---|
| 101 | container body, | 102 | battery, |
| 103 | partition plate, | 131 | vent port, |
| 104 | electrical device, | 11 | battery compartment, |
| 12 | electrical device compartment. | | |

### DETAILED DESCRIPTION OF THE EMBODIMENTS

A container used for a photovoltaic power station is provided according to an embodiment of the present application. Internal space of the container is divided into multiple compartments by a partition plate, and the partition plate may be equipped with a heat exchange structure, enabling heat exchange between the compartments on both sides of the partition plate, and allowing heat from the compartment with higher temperature to be transferred to the adjacent compartment with lower temperature for dissipation. This improves the cooling utilization of the cooling system in the compartment with lower temperature, thereby enhancing the overall cooling efficiency of the container. A photovoltaic power station using the above container is further provided according to the present application, which achieves high overall cooling efficiency, reduces cooling energy consumption, and lowers costs.

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. All the other embodiments obtained by those skilled in the art based on the embodiments in the present application without any creative work belong to the scope of protection of the present application.

With reference to FIGS. 1 and 2, a container applied in a photovoltaic power station is provided according to an embodiment of the present application, including a container body 101. An internal space of the container body 101 is divided into multiple compartments by a partition plate 103, which is fixed in the container body 101. The number of the partition plate 103 may be one or more, and at least one of the partition plates 103 is provided with a heat exchange structure for heat exchange between the compartments on both sides of the partition plate 103.

When applying the above container, the partition plates 103 selected to be provided with the heat exchange structures should be determined based on the cooling utilization of the cooling systems in the compartments. Specifically, if the cooling system in a certain compartment has low cooling utilization, where its cooling capacity exceeds the cooling requirements of the equipment, causing the temperature in that compartment to be lower than that in the adjacent compartment, the partition plate 103 separating this compartment from the adjacent compartment may be provided with the heat exchange structure.

In the above container, the partition plate 103 after being provided with the heat exchange structure allows heat exchange between the compartments on both sides of the partition plate. Heat from the compartment with higher temperature is transferred to the compartment with lower temperature for dissipation. This improves the cooling utilization of the cooling system in the compartment with lower temperature, reduces cooling energy consumption, and enhances the overall cooling efficiency of the container.

The above compartment with lower temperature facilitates heat dissipation of the adjacent compartment with higher temperature through the heat exchange structure of one partition plate 103 due to its low temperature, or facilitates heat dissipation of two adjacent compartments with different temperatures through the heat exchange structures of two partition plates 103 respectively due to its low temperature, or facilitates heat dissipation to three adjacent compartments with different temperatures through the heat exchange structures of three partition plates 103 respectively due to its low temperature, and the like. This embodiment does not limit the number of adjacent compartments with higher temperatures are provided with heat dissipated from the compartment with lower temperature of the container body.

The heat exchange structure may be configured as a vent port 131. The number of the vent port 131 may be multiple, and there may be two types of vent ports. Ventilation directions of the two types of vent ports 131 are opposite from each other, enabling hot air to be delivered from the compartment with higher temperature on one side of the partition plate 103 to the compartment with lower temperature on the other side of the partition plate through the first type of vent port, and cold air to be delivered from the compartment with lower temperature on the other side of the partition plate to the compartment with higher temperature on one side of the partition plate through the second type of vent port. This allows the air to circulate in the compartments on both sides of the partition plate, so as to achieve the effect of cooling the equipment in the compartment on the side with higher temperature.

The air in the compartments on both sides of the partition plate 103 may automatically circulate through the vent ports 131 under the effect of pressure difference. In order to improve the flow rate of the air circulation, at least one type of the two types of vent ports 131 is mounted with a fan, and a direction of airflow from the fan is the same as a ventilation direction of the vent port 131 where the fan is mounted.

Further, in the above container, the two types of vent ports 131 are arranged at two opposite ends of the partition plate 103 respectively, to avoid interference between airflows at the two types of vent ports 131, so as to prevent the efficiency of the air circulation from being affected.

In this embodiment, the compartments on both sides of the partition plate 103 are in communication with each other through the vent ports 131, and sealing design is provided to the container body 101 to enable the compartments reach a high IP protection level together, so as to protect the equipment in the two compartments from external environmental hazards.

In the above embodiment, a filter screen may be mounted at the vent port 131 to prevent the equipment in the compartments on both sides of the partition plate 103 from internal environmental hazards of the adjacent compartments.

In the above container, the heat exchange structure may include a heat exchanger, which is used to absorb heat from the compartment with higher temperature located at one side of the partition plate 103 and dissipate it to the compartment with lower temperature located at the other side of the partition plate 103.

In the container provided in this embodiment, the heat exchanger, rather than the vent port 131, is employed to physically isolate the compartments on both sides of the partition plate 103, to satisfy the firefighting requirement of the equipment in the two compartments, and to avoid the equipment in either compartment being subjected to environmental hazards within the adjacent compartment on the other side of the partition plate 103.

Also, other types of isolation and heat dissipation structures may be integrated onto the partition plate 103, so as to make use of the low temperature of the compartment on one side of the partition plate 103 to dissipate heat from the compartment on the other side.

In the container provided by the above embodiment, in the compartments on both sides of the partition plate 103 provided with the heat dissipation structure, the compartment with higher temperature may eliminate the need for arranging a separate heat dissipation system based on the heat dissipation efficiency of the heat dissipation structure, so as to avoid excessive redundancy of the heat dissipation system, and avoid the need for development and design of the heat dissipation system especially for the compartment with higher temperature. Of course, the compartment with higher temperature may also employ a cooling system with low heat dissipation efficiency and small energy consumption based on the cooling efficiency of the cooling structure, which is not limited in this embodiment, as long as the actual heat dissipation demands of the equipment in the compartment with higher temperature can be satisfied.

Specifically, in the above container, the number of the partition plate 103 is one, and the compartments at both sides of the partition plate 103 are a battery compartment 11 and an electrical device compartment 12 respectively. Multiple batteries 102 are arranged inside the battery compartment 11, and an electrical device 104 such as a converter and/or a transformer can be arranged in the electrical device compartment 12.

The batteries 102 may be cooled by a liquid cooling heat dissipation system, which is more efficient and makes the temperature of the battery compartment 11 lower than that of the electrical device compartment 12.

In the above container, the container body 101 is in a shape of a cuboid, and the battery compartment 11 and the electrical device compartment 12 are arranged sequentially along a length direction of the container body 101, or the battery compartment 11 and the electrical device compartment 12 are arranged sequentially along a width direction of the container body 101, or the battery compartment 11 and the electrical device compartment 12 are arranged sequentially along a height direction of the container body 101, which is not limited by this embodiment.

The temperature of the electrical device compartment 12 in the container provided by this embodiment is less affected by the external ambient temperature, which can improve a situation of temperature stratification and large temperature difference between the battery compartment 11 and the electrical device compartment 12.

A photovoltaic power station is further provided according to an embodiment of the present application, including the container provided by the above embodiments.

The photovoltaic power station employs the container provided by the above embodiments, the container has a high overall cooling efficiency, which reduces cooling energy consumption, and lowers costs. Of course, the photovoltaic power station provided by this embodiment also has other effects relating to the container provided by the above embodiments, which will not be repeated herein.

The above embodiments in this specification are described in a progressive manner. Each of the embodiments is mainly focused on describing its differences from other embodiments, and references may be made among these embodiments with respect to the same or similar portions among these embodiments.

Based on the above description of the disclosed embodiments, those skilled in the art are capable of carrying out or using the present application. It is obvious for those skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. A container applied in a photovoltaic power station, comprising a container body, wherein an internal space of the container body is divided into a plurality of compartments by a partition plate, the number of the partition plate is one or more, and at least one of the one or more partition plates is provided with a heat exchange structure for heat exchange between compartments, located at both sides of the at least one partition plate, of the plurality of compartments.

2. The container according to claim 1, wherein the heat exchange structure is a vent port.

3. The container according to claim 2, wherein the number of the vent port is plural, and there are two types of vent ports, which have opposite ventilation directions.

4. The container according to claim 3, wherein at least one of the two types of vent ports is provided with a fan, and a direction of airflow from the fan is the same as a ventilation direction of the vent port where the fan is mounted.

5. The container according to claim 3, wherein the two types of vent ports are arranged at two opposite ends of the partition plate, respectively.

6. The container according to any one of claims 2 to 5, wherein a filter screen is mounted at the vent port.

7. The container according to claim 1, wherein the heat exchange structure comprises a heat exchanger, and the heat exchanger is configured to absorb heat from the compartment located at one of both sides of the at least one partition plate and dissipate the heat to the compartment located at the other one of both sides of the partition plate.

8. The container according to claim **1,** wherein the number of the partition plate is one, and the compartments at both sides of the partition plate are a battery compartment and an electrical device compartment respectively.

9. The container according to claim 8, wherein the battery compartment and the electrical device compartment are arranged sequentially along a length direction of the container body, or the battery compartment and the electrical device compartment are arranged sequentially along a width direction of the container body.

10. A photovoltaic power station, comprising the container according to any one of claims 1 to 9.
